# FASCICULE DE BREVET EUROPEEN

(11) **EP 0 553 577 B1**
(45) Date de publication et mention de la délivrance du brevet: **13.09.1995**
(21) Numéro de dépôt: 92400252.0
(22) Date de dépôt: 30.01.1992
(51) Int. Cl.: E03D 1/14, F16H 25/18, G05G 5/05

(54) **Dispositif de commande de chasse d'eau pour WC permettant de programmer au choix le volume d'eau nécessaire au bon nettoyage de la cuvette**
Toilettenspülungsbetätigungsvorrichtung mit regulierbarer Wassermenge notwendig für eine gute Reinigung des Beckens
Toilet flushing control device with regulatable water volume necessary to clean the bowl properly

(43) Date de publication de la demande: 04.08.1993
(73) Titulaire: Jacquet, Jean, F-91230 Montgeron (FR)
(72) Inventeur: Jacquet, Jean, F-91230 Montgeron (FR)

(56) Documents cités:
- EP-A- 0 365 377
- DE-A- 2 611 604
- DE-A- 3 215 602
- FR-A- 2 665 201
- US-A- 4 145 774

## Description

La présente invention concerne un dispositif de commande de chasse d'eau pour WC qui permet d'économiser l'eau, en programmant au choix le volume d'eau nécessaire au bon nettoyage de la cuvette.

Cette invention est applicable sur les WC équipés de réservoirs attenants à la cuvette.

L'utilisation d'eau potable pour les WC (qui, en elle-même est un gaspillage) représente une part très importante dans la consommation domestique journalière de chaque personne. Aussi trouve-t-on actuellement dans le commerce de nombreux dispositifs de chasse d'eau équipés d'une interruption de vidange. Cette opération se fait en général suivant deux procédés :
- sur les dispositifs à tige de commande verticale, on intervient directement sur le bouton de commande,
- sur les dispositifs avec commande à bouton poussoir on relâche le pression exercée sur le bouton.

Ces deux procédés ne sont pas satisfaisants. En effet, de nombreux utilisateurs emploient des cartouches de produits pour désodoriser, désinfecter ou détartrer leur cuvette de WC. Malheureusement, tous ces produits contiennent des agents moussants qui ne permettent pas de voir si la vidange a été correctement effectuée... et, dans le doute, nombreux sont ceux qui préfèrent alors libérer la totalité du contenu du réservoir.

Le dispositif présenté selon la présente invention évite ces inconvénients car il permet de programmer et de libérer, après chaque utilisation du WC, la quantité d'eau seulement nécessaire. Enfin, autre avantage, il supprime l'opération (déplaisante) de l'interruption personnelle de vidange.

Cette invention peut s'adapter sur la plupart des mécanismes de vidange de chasse d'eau actuellement en service; elle apporte une économie d'eau importante ainsi qu'un confort d'utilisation. C'est une évolution marquante et la suite logique des mécanismes actuels de chasse d'eau actionnés par chaînette, tirette ou bouton poussoir.

A cet effet, L'invention concerne un dispositif de commande de chasse d'eau pour WC permettant de programmer au choix le volume d'eau nécessaire au bon nettoyage de la cuvette; il comprend une première bague et une seconde bague dont la rotation relative de l'une par rapport à l'autre par un bouton de commande à plusieurs positions provoque la montée ou la descente d'un piston qui agit sur la vidange, ainsi que des moyens de rappel pour assurer le retour à une position de repos.

Conformément à l'invention, les bagues ont des ouvertures servant à la montée ou à la descente des tétons du piston, la première au moins étant hélicoïdale, la seconde définissant un contour de forme prédéterminée commandant la dynamique du piston en relation avec la précédente ouverture ou inversement.

Conformément à un mode de réalisation préféré, l'ouverture de ladite seconde bague comprend une zone de montée du piston délimitée en bas par un contour inférieur hélicoïdal, une zone stationnaire du piston délimitée en bas par un contour horizontal en prolongation du précédent, une zone de descente du piston définie par un contour vertical rejoignant la position de repos. Les contours hélicoïdaux sont de préférence à 45°. La première bague est interne, fixe et renferme le piston.

Selon un mode de réalisation, les moyens de rappel comprennent au moins un premier ressort agissant directement entre lesdites bagues. Ce ressort s'étend circulairement autour de la bague interne

Selon un mode de réalisation avantageux, les moyens de rappel comprennent un deuxième ressort placé transversalement entre lesdites bagues par le biais de deux attaches fixées respectivement sur leur partie supérieure et exerçant une force de rappel diminuant celle du premier ressort depuis une demi-phase initiale de retour et l'augmentant depuis une demi-phase terminale de retour.

Selon une caractéristique supplémentaire de l'invention le dispositif comprend en outre des moyens ralentisseurs du retour à la position (0) associés à des moyens de réglage de leur action.

L'invention proposée se présente sous la forme d'un bouton de commande fixé sur le couvercle du réservoir.

Le bouton est constitué de deux bagues ajourées : une bague extérieure mobile, une bague interne fixe dans laquelle vient se loger un piston équipé de deux tétons transversaux montés sur un manchon libre. Ces derniers viennent se placer dans des ouvertures pratiquées dans les deux bagues.

La rotation du bouton se fait par l'intermédiaire d'une poignée fixée sur la bague extérieure mobile. En tournant, cette dernière entraîne les deux tétons qui prennent appui dans les ouvertures en forme d'hélice pratiquées sur les bagues fixe et mobile. De ce fait, ils transmettent au piston un mouvement vertical qui fait monter, ou descendre, une tige de commande qui actionne, ou arrête, la vidange du réservoir. Cette tige, vissée à l'intérieur du piston, assure la liaison avec un mécanisme de vidange.

Pour déclencher le dispositif de chasse d'eau, il faut tourner le bouton de commande d'environ 90°, la tige de commande du mécanisme vient en position haute, l'eau s'évacue dans la cuvette. Pour choisir un volume de vidange plus ou moins important, il suffit de régler le bouton dans un secteur compris entre 90° et 180° maximum. Plus la rotation est importante, plus la tige de commande reste en position haute longtemps permettant ainsi à un plus grand volume d'eau de s'écouler. Une fois le réglage choisi, on lâche la poignée du bouton, un ressort de rappel circulaire travaillant en traction ramène alors vers la position 0 la bague extérieure mobile; celle-ci entraîne dans sa course les tétons du piston qui, guidés dans leur déplacement par l'ouverture en forme d'hélice pratiquée sur la bague fixe, abaissent la tige de commande et interrompent l'opération de vidange.

Un ressort transversal travaillant en traction vient compléter le ressort circulaire de rappel. Fixé sur la bague fixe et la bague mobile, il maintient, grâce à sa faible tension initiale, le bouton de commande dans la position 0. Lorsqu'on choisit un volume de vidange, on allonge, dans un premier temps, ce ressort transversal et la tension de ce dernier devient maximum lorsque l'on a effectué une rotation du bouton de 90°. Après, entre 90° et 180°, c'est une détente de ce même ressort qui aide et réduit l'effort à fournir sur la poignée pour l'extension du ressort de rappel (cet effort, en effet, est surtout sensible entre 90° et 180°).

Lors du retour du bouton de commande sur la position 0, la force de rappel du ressort circulaire doit être réduite pour éviter une interruption de vidange prématurée et permettre l'évacuation totale du volume d'eau désiré. La présence du ressort transversal évitera cet inconvénient; il va en effet, s'allonger lorsque la rotation du bouton de commande reviendra de 180° à 90° et ralentir, de ce fait, le rappel vers la position 0.

Par contre, entre 90° et 0°, ce ressort va détendre une nouvelle fois et fournir un effort de traction complémentaire à celui, limité, du ressort circulaire qui arrive en fin de rappel. Cet effort est nécessaire lorsqu'on désire une vidange partielle. Cela permet d'abaisser la tige de commande du mécanisme qui est retenue en position haute par la pression de l'eau qui s'engouffre dans l'orifice de sortie du réservoir.

Les dessins annexés illustrent l'invention avec un mode de réalisation, donné à titre d'exemple, dans lequel sont représentés :
- figure 1 : le dispositif vu en coupe,
- figure 2 : le dispositif vu de dessus,
- figure 3 : la section horizontale AA du dispositif,

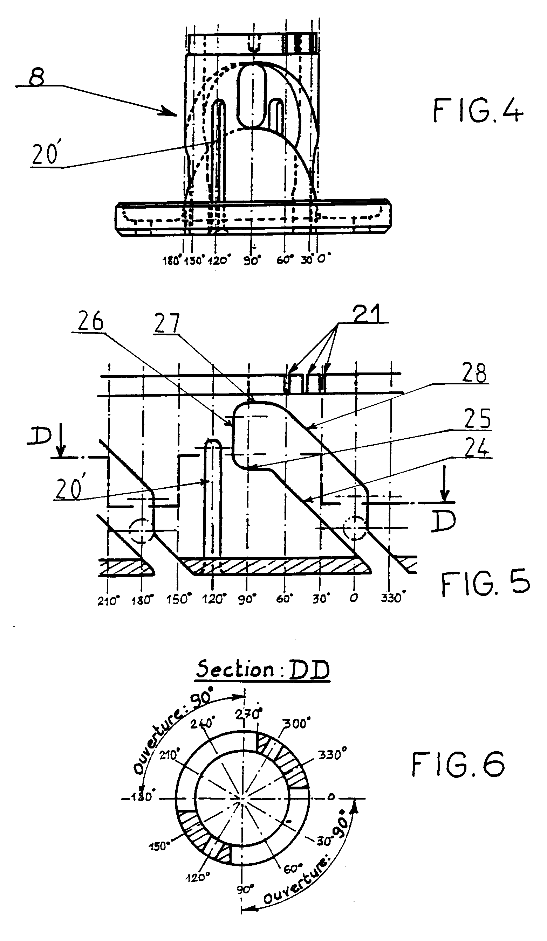

- figure 4 : la vue extérieure de la bague interne fixe,
- figure 5 : la vue développée faisant ressortir les ouvertures pratiquées sur la bague interne fixe,
- figure 6 : la section horizontale DD de la bague interne fixe,
- figure 7 : la vue extérieure de la bague extérieure mobile,
- figure 8 : la vue développée faisant ressortir les ouvertures pratiquées sur la bague extérieure mobile,
- figure 9 : la section horizontale DD de la bague extérieure mobile,
   figures 10 à 14 : l'ensemble du piston, son coussinet, son manchon mobile avec ses deux tétons,
- figures 15 à 17 : la position des ressorts de rappel :
   - au repère 0,
   - après une rotation du bouton de commande de 0 à 90° ou de 180° à 90°,
   - après une rotation de 180°.
- figures 18 à 21 : en développé les différentes positions relatives des deux bagues interne et externe lors de la rotation du bouton de commande :
   - au repère 0 et après une rotation de 60°,
   - après une rotation de 90°,
   - après une rotation de 180°,
   - lors du retour vers le point 0.
- figures 22 : deux demi-vues du dispositif représentant en coupe partielle deux modes de réalisation des moyens ralentisseurs;

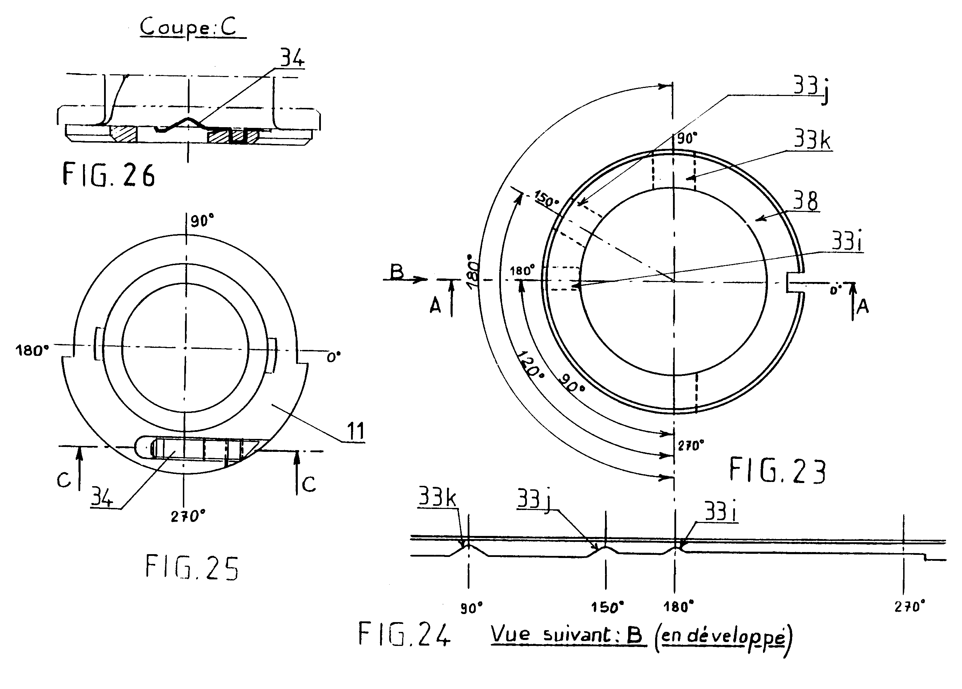

- figures 23 à 26 : les parties constitutives des moyens ralentisseurs à effet dégressif.

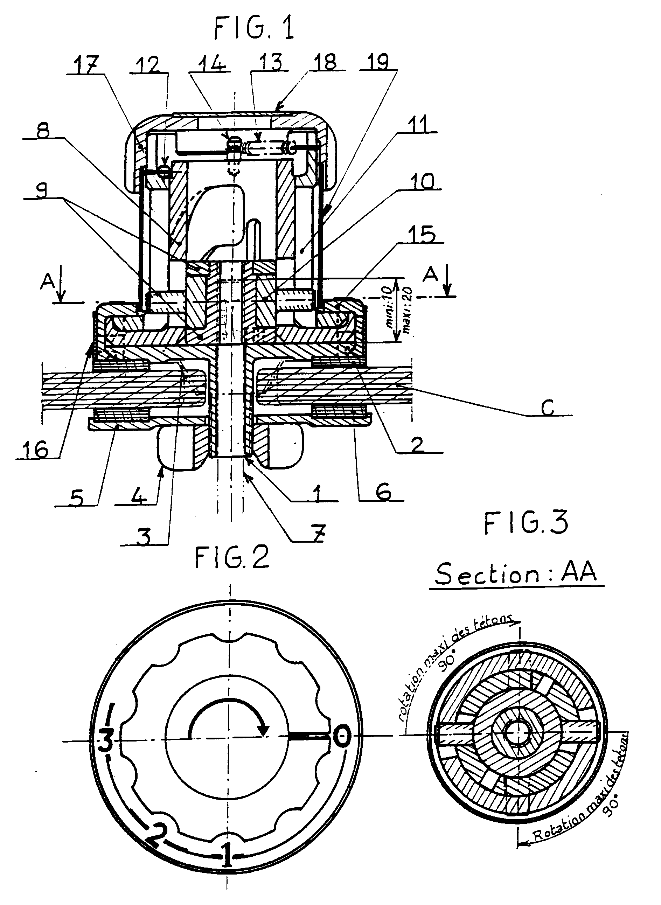

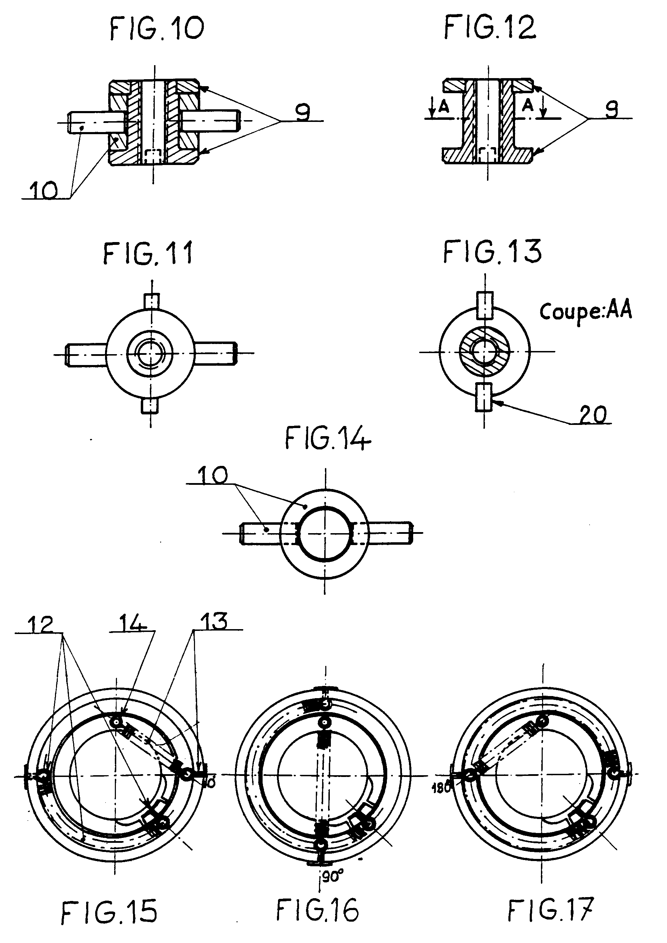

En référence à ces dessins le dispositif selon l'invention est constitué :
a) d'un support de bouton de commande avec sa fixation (1 à 6). La partie inférieure de ce support (1) est logée dans le trou du couvercle du réservoir (C) après mise en place d'un joint en caoutchouc (2). Dans le cas d'un diamètre important de ce trou, on peut ajouter une contrebague (3).
   La fixation du support sur le couvercle du réservoir (C) est réalisée par un écrou à croisillon (4), une rondelle large (5), un joint en caoutchouc (6).
   Une tige de commande (7) assure la liaison entre l'ensemble du dispositif de vidange et le bouton de commande selon l'invention.
   La partie supérieure de cette tige (7) dépasse de 10 à 20 mm l'appui du support (1) comme indiqué sur la figure 1.
   Le bouton de commande vient se visser sur l'extrémité de la tige (7) et reposer sur son support (1).
b) d'un bouton de commande (8 à 19) constitué :
   - d'une bague interne fixe (8) dans laquelle vient se loger un piston (9 et 10) composé (Figs 10 à 14) :
   - d'un coussinet (9) comportant des moyens de liaison avec la tige de commande (7) (un filetage interne pour la tige de commande filetée 7 par exemple ou bouchon avec filetage interne vissable par le haut sur la tige et se positionnant dans un alésage vertical du coussinet); ce dernier est guidé dans ses déplacements verticaux par deux ergots (20) coulissant dans deux rainures situées dans la bague interne (8),
   - d'un manchon mobile équipé de deux tétons (10).
   - d'une bague extérieure mobile (11),
   - d'un ressort circulaire de rappel (12) avec deux attaches en fil d'acier inox :
   - 1 sur la partie supérieure de la bague interne fixe (8) au droit des trois encoches (21) prévues à cet effet,
   - 1 sur la partie supérieure de la bague extérieure mobile (11) au droit de l'encoche prévue à cet effet (22).
   - d'un ressort transversal (13) avec deux attaches :
   - un cylindre (14), fixée sur la partie supérieure de la bague interne fixe (8) dans un trou prévu à cet effet,
   - 1 en fil d'acier inox fixée sur la partie supérieure de la bague extérieure mobile (11) au droit de l'encoche (23) prévue à cet effet.
   - d'un couvercle inférieur (15). Il maintient l'ensemble d bouton de commande sur son support. En outre, sur ce couvercle, sont indiqués des repères permettant de choisir, suivant utilisation, le volume de vidange nécessaire,
   - d'une bague extérieure chromée (16) pour l'habillage et le maintien du couvercle inférieur (15),
   - d'un couvercle supérieur formant poignée (17) comportant :
   - un chapeau chromé (18),
   - une bague d'habillage chromée(19).

A la figure 5, on voit que la bague interne 8 comprend deux ouvertures décalées de 180° de forme globale hélicoïdale. Plus précisément, l'ouverture définit un contour hélicoïdal inférieur (24) à 45° s'étendant de 0 à 70°, prolongé d'un palier (25) entre 70° et 90° environ puis par un contour vertical (26) représentant environ trois fois le diamètre du téton, puis un contour horizontal (27) entre 90° et 70°, puis un contour hélicoïdal (28) à 45° descendant parallèlement au précédent de 70° à 0°, puis un contour vertical suivi d'un évidement à 45° pour le passage du téton. Ces deux derniers contours pourraient éventuellement être remplacés par un contour à 45° jusqu'en bas de la bague. Entre les ouvertures se trouvent une rainure de guidage vertical (20') d'un ergot du piston.

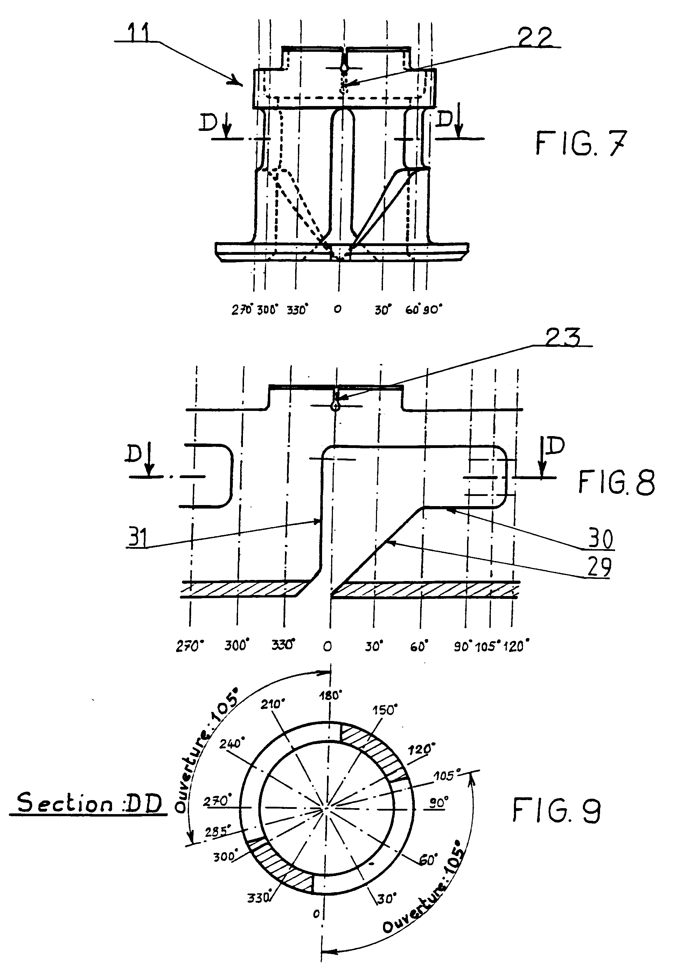

A la figure 8, on voit que la bague externe comporte une ouverture de forme particulière. Elle est définie par un contour inférieur hélicoïdal (29) entre 0° et 60°, de sens contraire à celui de la bague interne, prolongé par un contour horizontal formant palier (30) de 60° à 105°, puis par un contour vertical représentant environ trois fois le diamètre du téton, puis par un contour horizontal de 105° à 0° au rayon du téton prés, puis par un contour vertical (31) à peu prés jusqu'au bas de la bague. Le bas de ce contour comprend un évidement à 45° pour le passage du téton lors du montage de l'ensemble.

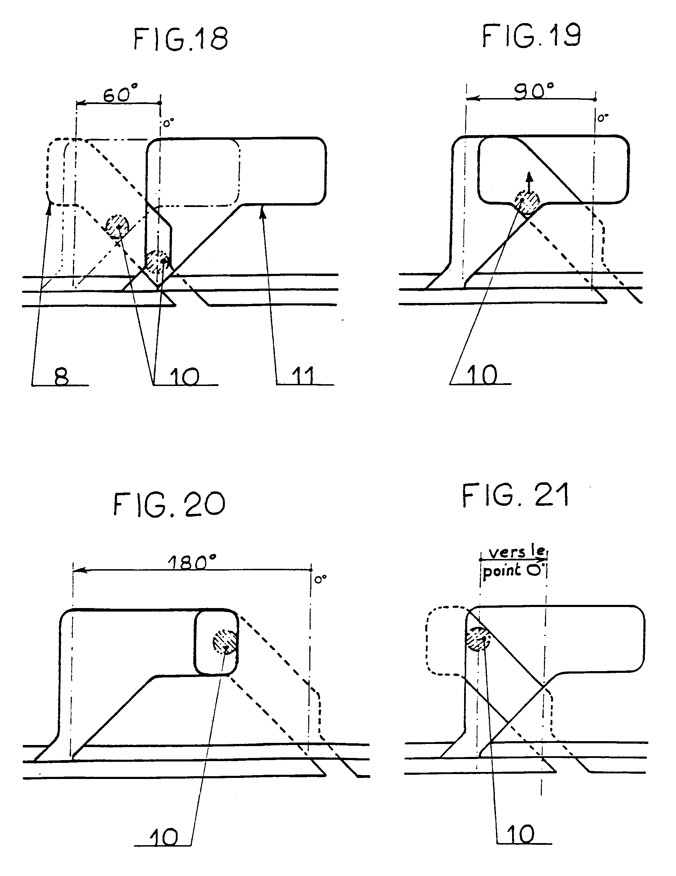

Le fonctionnement du dispositif selon la présente invention est le suivant (figures 18 à 21):
A la position de repos du dispositif le piston est en bas et les tétons du piston se trouvent dans une position basse au début des contours hélicoïdaux inférieurs des deux bagues en traversant leurs ouvertures comme le montre la figure 18. Pour une rotation de la bague externe de 0° à 120°, les tétons du piston sont guidés vers le haut en appui sur les deux contours hélicoïdaux opposés. Les tétons subissent en fait un mouvement hélicoïdal jusqu'au palier d'une amplitude angulaire de 60° soit deux fois moins que l'amplitude angulaire de la bague. Avant d'arriver au palier à la figure 19, on suppose que le clapet de la chasse d'eau est suffisamment levé pour que l'échappement de l'eau crée une pression suffisante pour lever complètement le clapet ainsi que le piston. Les tétons sont contraints à quitter les contours hélicoïdaux inférieurs pour se trouver en position haute maximale dans un évidemment rectangulaire au dessus des paliers définissant une zone stationnaire pour eux (figure 20). Pour une rotation supplémentaire d'une amplitude de 60° de la bague externe les tétons restent dans la position haute maximale au dessus des paliers tant que l'eau s'évacue.

Au relâchement de la bague (figure 21), les forces des moyens de rappels ramènent la bague externe vers sa position initiale 0°. Le contour vertical (31) heurte le téton et l'entraîne dans sa rotation contre le contour (28) de la bague interne, ce qui provoque la descente hélicoïdale du téton le long des contours respectifs des bagues. A peu de distance avant d'arriver au point 0°, on suppose que le clapet est suffisamment abaissé pour que l'eau restante exerce sur lui une pression de fermeture et le fait descendre, ou en cas d'absence d'eau que le clapet descende par simple gravité.

D'une manière générale on peut agir sur la pente des contours de chaque bague en fonction de l'effet recherché concernant la dynamique du piston. Ainsi par exemple, l'ascension maximale du piston peut être atteinte pour une rotation de la bague externe de 60° seulement au lieu de 180° en ayant un contour (24) vertical au lieu d'être à 45°. Toutefois l'effort manuel nécessaire pour actionner le dispositif est beaucoup plus important pour guider les tétons sur le contour (24) à 45 °de la bague interne. Le même effet pourrait être obtenu que celui du mode de réalisation préférentiel de l'invention en ayant une pente du contour (24) divisée par deux. Toutefois dans ce cas, les ouvertures s'étendraient sur un plus grand arc, à savoir 120°, ce qui fragiliseraient la bague. Le recours à deux bagues offre plus de possibilités dans le choix de la dynamique du piston sans compromettre la rigidité des bagues. D'autre part, le recours à un contour (29) à 45° permet de retarder plus la descente des tétons par rapport à un contour qui serait vertical. Le mode réalisation préférentiel permet de choisir la meilleure souplesse d'utilisation et d'avoir une échelle plus étendue des repères de programmation de la quantité d'eau de vidange par sa démultiplication du mouvement hélicoïdal.

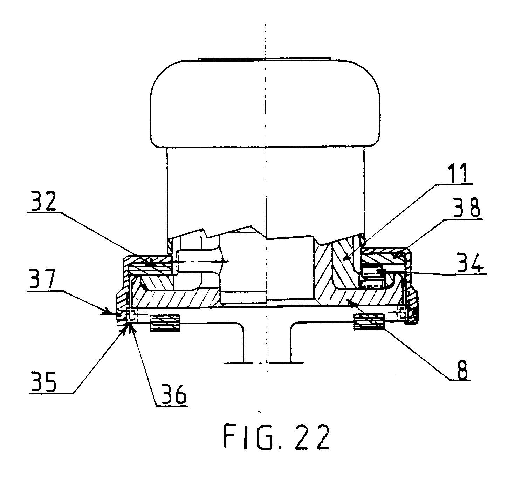

A la figure 22, on voit que le dispositif conforme à l'invention comprend en outre des moyens ralentisseurs (32) et (33, 34) du retour à la position (0) associés à des moyens de réglage de leur action (35, 36, 37).

Conformément à un premier mode de réalisation, lesdits moyens ralentisseurs sont constitués d'un joint en caoutchouc (32) situé au plan de jonction de la bague externe mobile et d'un couvercle inférieur annulaire maintenant la bague externe contre un support (1) fixe, tandis que les moyens de réglage comprennent un filetage (35) à l'extrémité du couvercle inférieur destiné à se visser sur un filetage du support (36) de manière à exercer une pression réglable sur le joint, ainsi qu'une vis d'arrêt (37) du couvercle sur le support.

Conformément à un deuxième mode de réalisation plus perfectionné, les moyens de réglage (33, 34) permettent un ralentissement dégressif au fur et à mesure du retour à la position (0). Lesdits moyens de réglage comprennent des crans de profondeur dégressive (33i, 33j, 33k) dans le sens du rappel réalisés dans un anneau (38), situés au plan de jonction de la bague externe et du couvercle inférieur (15), et dans lesquels passe une lame élastique (34) liée à la bague externe pendant le mouvement de rappel notamment.

D'autre part, lesdits moyens de réglage comprennent un filetage (35) à l'extrémité du couvercle inférieur destiné à se visser sur un filetage (36) du support de manière à exercer une pression réglable sur la lame élastique, ainsi qu'une vis d'arrêt (37) du couvercle sur le support. Les crans peuvent être disposés respectivement à des endroits correspondants à des volumes d'eau de vidange prédéterminés notamment rotation de la bague externe de 90°, 120°, 180°.

Ainsi, par vissage du couvercle inférieur, on peut régler le temps nécessaire au retour de la bague externe et par conséquent régler plus précisément le volume d'eau de vidange pour un actionnement déterminé du bouton de commande.

Le second mode est mieux adapté que le premier; en effet dans la mesure ou les ressorts de rappel exercent une force qui faiblit en fin de course, il convient d'avoir des moyens ralentisseurs qui faiblissent également en même temps.

En tournant la poignée du couvercle supérieur (17) suivant la flèche indiquée sur le chapeau (18), la bague extérieure mobile (11) entraîne les deux tétons du manchon mobile (10) dans les ouvertures en forme d'hélice cylindrique situées sur la bague interne fixe (8); le piston monte alors à l'intérieur de cette bague et soulève la tige de commande (7) du dispositif de chasse d'eau, ce qui libère la vidange du réservoir.

Pour aider à la sélection du volume d'eau nécessaire au bon nettoyage de la cuvette ont a représenté quatre repères sur l'appareil présenté.
- le repère 0,
- le repère 1, (rotation d'environ 90°), soit une quantité distribuée correspondant à peu près à 30 % du volume d'eau habituel du réservoir,
Ce repère 1 sera employé lors d'une utilisation du WC en urinoir (sans papier),
- le repère 2 (rotation d'environ 120°), soit une quantité distribuée correspondant à peu près à la moitié du volume d'eau habituel du réservoir.

Ce repère 2 sera employé lors d'une utilisation du WC en urinoir (avec papier).
- le repère 3 (rotation de 180°), soit une quantité distribuée correspondant à la totalité du volume d'eau habituel du réservoir.

Ce repère 3 sera utilisé lors de l'emploi normal du WC.

La rotation de la poignée du couvercle supérieur (17) sur les positions 1, 2 ou 3 permet de maintenir la tige de commande (7) en position haute plus ou moins longtemps, entraînant de ce fait une vidange plus ou moins importante du réservoir. Une fois choisie une des positions 1, 2 ou 3 la poignée du couvercle (17) entraînée par le rappel du ressort circulaire (12) revient à la position 0. Toutefois, pour éviter un retour trop rapide qui nuirait à la qualité de vidange du réservoir, on voit aux figures 15 à 17 que le ressort transversal (13) freine dans un premier temps pour une rotation de la bague externe de 180°à 90° (demi-phase initiale de retour), le ressort est alors en position d'équilibre tendu au maximum, il agit comme un bistable. Ensuite pour une rotation de la bague externe de 90° à 0° (demi-phase terminale de retour), alors que le ressort circulaire (12) arrive en fin de rappel, le ressort transversal (13) qui est tendu donne l'effort nécessaire pour faire baisser la tige de commande (7) notamment lorsqu'on désire obtenir une vidange partielle du réservoir (position 1 et 2).

Le dispositif selon la présente invention peut être jumelé avec la plupart des mécanismes de vidange de chasse d'eau équipés de réservoirs attenants.

Seule la tige de commande (7) reliant le dispositif aux divers modèles de mécanismes de chasse d'eau actuellement dans le commerce sera différente suivant les cas. Une adaptation du piston pourra être faite selon le modèle de commande retenu.

Le dispositif conforme à l'invention est d'un prix de revient peu élevé car, à part les ressorts en acier inox et les joints en caoutchouc, toutes les pièces sont en matière plastiques, notamment moulées par injection. Les pièces soumises à des frottements sont de préférence réalisées en copolymère d'acétal (POM).

La solution présentée n'est donnée qu'à titre d'exemple et l'invention couvre toutes les variantes, notamment l'adjonction d'un ressort complémentaire ou tout système de freinage au rappel du bouton de commande.

## Revendications

1. Dispositif de commande de chasse d'eau pour WC permettant de programmer au choix le volume d'eau nécessaire au bon nettoyage de la cuvette, caractérisé en ce qu'il comprend une première bague (8) et une seconde bague (11) dont la rotation relative de l'une par rapport à l'autre par un bouton de commande à plusieurs positions provoque la montée ou la descente d'un piston (9, 10) qui agit sur la vidange, ainsi que des moyens de rappel (12, 13) pour assurer le retour à une position de repos (0).

2. Dispositif selon la revendication 1, caractérisé en ce que les bagues ont des ouvertures servant à la montée ou à la descente des tétons du piston (10), la première au moins étant hélicoïdale (8), la seconde (11) définissant un contour de forme prédéterminée commandant la dynamique du piston en relation avec la précédente ouverture ou inversement.

3. Dispositif selon la revendication 2, caractérisé en ce que l'ouverture de ladite seconde bague comprend une zone de montée du piston délimitée en bas par un contour inférieur hélicoïdal (29), une zone stationnaire du piston délimitée en bas par un contour horizontal (30) en prolongation du précédent, une zone de descente du piston définie par un contour vertical (31) rejoignant la position de repos.

4. Dispositif selon la revendication 2 et 3, caractérisé en ce que les contours hélicoïdaux sont à 45°.

5. Dispositif selon la revendication 1, caractérisé en ce que la première bague est interne (8), fixe et renferme le piston (9) et (10) constitué:
- d'un coussinet (9) guidé dans ses déplacements verticaux par deux ergots (20) coulissant dans deux rainures dans la bague interne (8),
- d'un manchon mobile équipé de deux tétons (10) traversant lesdites ouvertures.

6. Dispositif selon la revendication 1, caractérisé en ce que les moyens de rappel comprennent au moins un premier ressort (12) agissant directement entre lesdites bagues.

7. Dispositif selon la revendication 6, caractérisé en ce que le premier ressort est muni de deux attaches fixées respectivement sur les parties supérieures (21) et (22) desdites bagues et s'étend circulairement autour de la bague interne.

8. Dispositif selon la revendication 6, caractérisé en ce que les moyens de rappel comprennent un deuxième ressort (13) placé transversalement entre lesdites bagues par le biais de deux attaches (14) fixées respectivement sur leur partie supérieure (21) et (23) et exerçant une force de rappel diminuant celle du premier ressort depuis une demi-phase initiale de retour et l'augmentant depuis une demi-phase terminale de retour.

9. Dispositif selon la revendication 1, caractérisé en ce qu'il comprend en outre des moyens ralentisseurs (32) et (33, 34) du retour à la position (0) associés à des moyens de réglage de leur action (35, 36, 37).

10. Dispositif selon la revendication 9, caractérisé en ce que:
- lesdits moyens ralentisseurs comprennent un joint en caoutchouc (32) situé au plan de jonction de la bague externe mobile et d'un couvercle inférieur annulaire maintenant la bague externe contre un support (1) fixe,
- et en ce que lesdits moyens de réglage comprennent un filetage (35) à l'extrémité du couvercle inférieur destiné à se visser sur un filetage du support (36) de manière à exercer une pression réglable sur le joint, ainsi qu'une vis d'arrêt (37) du couvercle sur le support.

11. Dispositif selon la revendication 9, caractérisé en ce que lesdits moyens de réglage (33, 34) permettent un ralentissement dégressif au fur et à mesure du retour à la position (0).

12. Dispositif selon la revendication 11, caractérisé en ce que lesdits moyens de réglage comprennent des crans de profondeur dégressive (33i, 33j, 33k) dans le sens du rappel réalisés dans un anneau (38), situés au plan de jonction de la bague externe et du couvercle inférieur (15), et dans lesquels passe une lame élastique (34) liée à la bague externe pendant le mouvement de rappel notamment.
- et en ce que lesdits moyens de réglage comprennent un filetage (35) à l'extrémité du couvercle inférieur destiné à se visser sur un filetage (36) du support de manière à exercer une pression réglable sur la lame élastique, ainsi qu'une vis d'arrêt (37) du couvercle sur le support.

13. Dispositif selon la revendication 12, caractérisé en ce que les crans sont disposés respectivement à des endroits correspondants à des volumes d'eau de vidange prédéterminés.

14. Dispositif selon l'une quelconque des revendications précédentes, caractérisé en ce que les bagues interne (8) et extérieure (11) ainsi que le piston (9) et (10) et le couvercle inférieur (15) sont réalisés en copolymère d'acétal (POM).

## Claims

1. A control device for the flushing apparatus of toilets, making it possible to programme the volume of water necessary to clean the bowl properly as desired, characterised in that it comprises a first ring (8) and a second ring (11), the rotation of one of which relative to the other by means of a multi-position control button causes a piston (9, 10) which acts on the drainage to be raised or lowered, and also restoring means (12, 13) to ensure return to an initial position (0).

2. A device according to Claim 1, characterised in that the rings have openings serving for the raising or lowering of the studs of the piston (10), the first opening at least being helical (8), and the second (11) defining a contour of predetermined shape controlling the dynamics of the piston in relation with the former opening or vice versa.

3. A device according to Claim 2, characterised in that the opening of said second ring comprises a zone for raising the piston defined at the bottom by a lower helical contour (29), a stationary zone of the piston defined at the bottom by a horizontal contour (30) prolonging the former, and a zone for lowering the piston defined by a vertical contour (31) joining the initial position.

4. A device according to Claims 2 and 3, characterised in that the helical contours are at 45°.

5. A device according to Claim 1, characterised in that the first ring is inner (8), fixed and encloses the piston (9) and (10), consisting of:
- a bearing bush (9) guided in its vertical displacements by two pins (20) which slide in two grooves in the inner ring (8),
- and of a mobile sleeve equipped with two studs (10) passing through said openings.

6. A device according to Claim 1, characterised in that the restoring means comprise at least one first spring (12) acting directly between said rings.

7. A device according to Claim 6, characterised in that the first spring is provided with two fasteners fixed respectively to the upper parts (21) and (22) of said rings and extends in circular manner about the inner ring.

8. A device according to Claim 6, characterised in that the restoring means comprise a second spring (13) placed transversely between said rings by means of two fasteners (14) fixed respectively to their upper parts (21) and (23) and exerting a restoring force diminishing that of the first spring from an initial return half-phase and increasing it from a final return half-phase.

9. A device according to Claim 1, characterised in that it furthermore comprises decelerating means (32) and (33, 34) for the return to the position (0) associated with means for controlling their action (35, 36, 37).

10. A device according to Claim 9, characterised in that:
- said decelerating means comprise a rubber packing (32) located in the junction plane of the outer mobile ring and a lower annular cover holding the outer ring against a fixed support (1),
- and in that said control means comprise a thread (35) at the end of the lower cover intended to be screwed onto a thread (36) of the support so as to exert a controllable pressure on the packing, and also a locking screw (37) for the cover on the support.

11. A device according to Claim 9, characterised in that said control means (33, 34) permit decreasing deceleration as the return to the position (0) is effected.

12. A device according to Claim 11, characterised in that said control means comprise notches of decreasing depth (33i, 33j, 33k) in the direction of restoring, formed in a ring (38), and located in the junction plane of the outer ring and of the lower cover (15), and into which an elastic blade (34) connected to the outer ring during the restoring movement in particular passes,
- and in that said control means comprise a thread (35) at the end of the lower cover intended to be screwed onto a thread (36) of the support so as to exert a controllable pressure on the elastic blade, and also a locking screw (37) for the cover on the support.

13. A device according to Claim 12, characterised in that the notches are arranged respectively at points corresponding to predetermined volumes of flushing water.

14. A device according to any one of the preceding claims, characterised in that the inner ring (8) and outer ring (11) and also the piston (9) and (10) and the lower cover (15) are made of acetal copolymer (POM).

## Patentansprüche

1. Toilettenspülungsbetätigungsvorrichtung die ermöglicht, die Wassermenge für eine gute Reinigung des Beckens zu regulieren,
**dadurch gekennzeichnet,**
daß sie einen ersten Ring (8) und einen zweiten Ring (11) umfaßt, wobei die relative Drehung des einen in bezug auf den andern durch einen Betätigungsknopf mit mehreren Stellungen das Steigen oder Sinken eines Kolbens (9, 10) verursacht, der auf die Entleerung wirkt, sowie Rückstelleinrichtungen (12, 13), um die Rückkehr in eine Ruhestellung (0) zu gewährleisten.

2. Vorrichtung nach Anspruch 1, dadurch gekennzeichnet, daß die Ringe Öffnungen haben, die dem Steigen oder Sinken der Zapfen des Kolbens (10) dienen, wobei wenigstens die erste (8) spiralförmig ist und die zweite (11) eine Kontur mit festgelegter Form definiert, die die Dynamik der Kolbens steuert in Verbindung mit der vorhergehenden Öffnung oder umgekehrt.

3. Vorrichtung nach Anspruch 2, dadurch gekennzeichnet, daß die Öffnung des besagten zweiten Rings eine Steigzone des Kolbens umfaßt, nach unten begrenzt durch eine untere spiralförmige Kontur (29), eine Stationärzone des Kolbens, nach unten begrenzt durch eine horizontale Kontur (30) als Verlängerung der vorhergehenden, eine Sinkzone des Kolbens, definiert durch eine vertikale Kontur (31), die die Ruhestellung wieder erreicht.

4. Vorrichtung nach Anspruch 2 und 3, dadurch gekennzeichnet, daß die spiralförmigen Konturen 45° aufweisen.

5. Vorrichtung nach Anspruch 1, dadurch gekennzeichnet, daß der erste Ring (8) ein Innenring ist, der feststehend ist und den Kolben (9) und (10) umschließt, gebildet:
- durch eine Lagerbuchse (9), bei ihren Vertikalverschiebungen geführt durch zwei Stifte (20), die in zwei Nuten im Innenring (8) gleiten,
- durch eine bewegliche Muffe, ausgestattet mit zwei Zapfen (10), die die genannten Öffnungen durchqueren.

6. Vorrichtung nach Anspruch 1, dadurch gekennzeichnet, daß die Rückstelleinrichtungen wenigstens eine erste Feder (12) umfassen, die direkt zwischen den genannten Ringen wirkt.

7. Vorrichtung nach Anspruch 6, dadurch gekennzeichnet, daß die erste Feder versehen ist mit zwei Verbindungselementen, die jeweils befestigt sind an den oberen Teilen (21) und (22) der genannten Ringe und sich kreisförmig um den Innenring herum erstrecken.

8. Vorrichtung nach Anspruch 6, dadurch gekennzeichnet, daß die Rückstelleinrichtungen eine zweite Feder (11) umfassen, quer angeordnet zwischen besagten Ringen auf dem Umweg über zwei Verbindungselemente (14), die jeweils befestigt sind an ihrem oberen Teil (21) und (23) und eine Rückstellkraft ausüben die die der ersten Feder verringert ab einer Retour-Anfangshalbphase und erhöht ab einer Retour-Endhalbphase.

9. Vorrichtung nach Anspruch 1, dadurch gekennzeichnet, daß sie außerdem Verzögerungseinrichtungen (32) und (33, 34) bezüglich der Rückkehr in die Stellung (0) umfaßt in Verbindung mit Reguliereinrichtungen ihrer Wirkung (35, 36, 37).

10. Vorrichtung nach Anspruch 9, dadurch gekennzeichnet:
- daß besagte Verzögerungseinrichtungen eine Gummidichtung (32) umfassen, in der Verbindungsebene des beweglichen Außenrings und eines ringförmigen unteren Deckels befindlich, den Außenring gegen einen festen Träger (1) haltend,
- und dadurch, daß besagte Reguliereinrichtungen ein Gewinde (35) am Ende des unteren Deckels umfassen, dazu bestimmt, auf ein Gewinde des Träger (36) geschraubt zu werden, um einen regulierbaren Druck auf die Dichtung auszuüben, sowie eine Anschlagschraube (37) des Deckels auf dem Träger.

11. Vorrichtung nach Anspruch 9, dadurch gekennzeichnet, daß besagte Reguliereinrichtungen (33, 34) eine degressive Verzögerung bzw. Verlangsamung ermöglichen in dem Maße der Rückkehr zur Stellung (0).

12. Vorrichtung nach Anspruch 11, dadurch gekennzeichnet, daß die Reguliereinrichtungen in Rückstellrichtung Einkerbungen mit abnehmender Tiefe (33i, 33j, 33k) umfassen, vorgesehen in einem Ring (38), der sich in der Verbindungsebene des Außenrings und des unteren Deckels (15) befindet, in die sich eine elastische Lamelle (34) setzt, verbunden mit dem Außenring, vor allem während der Rückstellbewegung.
- und dadurch, daß die Regulierungseinrichtungen ein Gewinde (35) am Ende des unteren Deckels umfassen, dazu bestimmt, auf ein Gewinde (36) des Trägers geschraubt zu werden, um einen regulierbaren Druck auf die elastische Lamelle auszuüben, sowie eine Anschlagschraube (37) des Deckels auf dem Träger.

13. Vorrichtung nach Anspruch 12, dadurch gekennzeichnet, daß die Einkerbungen jeweils an Stellen angeordnet sind, die festgelegten Entleerungswassermengen entsprechen.

14. Vorrichtung nach einem der vorangehenden Ansprüche, dadurch gekennzeichnet, daß der Innenring (8) und der Außenring (11) sowie der Kolben (9) und (10) und der untere Deckel (15) aus Acetal-Copolymer (POM) hergestellt sind.
